# EUROPEAN PATENT SPECIFICATION

(11) **EP 3 590 771 B1**
(45) Date of publication and mention of the grant of the patent: **03.03.2021**
(21) Application number: 18181386.6
(22) Date of filing: 03.07.2018
(51) Int. Cl.: B60R 19/52, B60K 11/08

(54) **A PROTECTIVE GRID SYSTEM WITH SEALING ELEMENTS**
SCHUTZGITTERSYSTEM MIT DICHTELEMENTEN
SYSTÈME DE GRILLE DE PROTECTION COMPORTANT DES ÉLÉMENTS D'ÉTANCHÉITÉ

(43) Date of publication of application: 08.01.2020
(73) Proprietor: Valeo Autosystemy SP. Z.O.O., 32-050 Skawina (PL)
(72) Inventor: GODZINA, Radoslaw, 320505 SKAWINA (PL); BARUS, Lukasz, 320505 SKAWINA (PL); ROCHECKI, Bartlomiej, 320505 SKAWINA (PL); WATOR, Tomasz, 320505 SKAWINA (PL)
(74) Representative: Tran, Chi-Hai

(56) References cited:
- EP-A1- 2 495 521
- WO-A1-2016/177826
- DE-A1- 1 476 394
- US-A- 4 140 177
- US-B1- 6 298 906
- US-B1- 8 454 720

## Description

The present disclosure relates to a heat exchanger system, particularly, the present disclosure relates to a protective grid system for protecting a heat exchanger system of a vehicle and maintaining proper performance and efficiency thereof. The document EP2495521 A1 discloses a protective grid system according to the preamble of claim 1.

A vehicle includes several heat exchanger elements. Conventionally, an engine cooling system of a vehicle includes a heat exchanger in form of a radiator to facilitate cooling of an engine of the vehicle. Specifically, a coolant in form of glycol or water-glycol mixture is passed through the engine, from where the coolant absorbs heat and becomes hot. The hot coolant is then fed into an inlet tank of the radiator that is located preferably on top of the radiator, or along one side of the radiator, from the inlet tank the hot coolant is distributed across a radiator core through radiator tubes to another tank on an opposite end of the radiator. As the hot coolant passes through the radiator tubes to the opposite tank, the coolant transfers heat to tubes of the radiator core, which in turn, transfers the heat to fins that are lodged between each row of radiator tubes. The fins then release the heat to the ambient air that flows across the radiator core. For effective and efficient performance of the radiator, there should be unhindered supply of ambient air to the radiator core. In order to save the power consumption in the vehicle, natural draft of air across the radiator core is utilized. For achieving natural draft of air across the radiator core, the radiator core is disposed behind a front grill of the vehicle, wherein the front grill is disposed between a front hood and a front bumper of the vehicle such that the ram air impinges on the front grille of the vehicle as the vehicle moves in forward direction. Such strategic placement of the radiator core enables the ram air to impinge on and pass through the radiator core disposed behind the front grille, thereby creating natural draft of air across the radiator core as the vehicle moves ahead in the forward direction. The engine cooling system often incorporates one or more fans disposed behind the radiator core to generate a forced draft of air that facilities passage of air through the radiator core. The forced draft generated by the fans improves the performance and efficiency of the radiator by improving the air flow rate through the radiator by increasing the air speed. The radiator may be disposed either alone or in series with other heat exchange elements such as for example, a condenser and a chiller that require draft of air for efficient operation thereof. Also, the sequence in which the radiator, condenser and chillers are disposed may vary, for example, sometimes the radiator is at the front to first receive the ram air and in other cases the condenser is at the front to first receive the ram air. The position of the radiator and the condenser can interchange.

However, such high speed ram air often carries therewith lighter articles such as paper, empty polythene bags, leaves and the likes, that may reach a front face of the heat exchanger core, such as for example, radiator core or condenser core and may get struck over there due to draft of air created by the fan or the ram air. Most often, these lighter articles accumulate in the space behind the front grille and in front of the radiator or condenser core causing hindrance to air flow and preventing ram air from reaching and entering the radiator or condenser core, thereby deteriorating efficiency and performance of the radiator or condenser. Certain prior art suggest placing a grid over the front face of the radiator or the condenser core. Such arrangement may still prevent all the ram air from reaching and entering the radiator or condenser core for achieving cooling of the hot coolant flowing through the radiator or condensing of the refrigerant in gaseous state flowing through condenser, thereby under utilizing the ram air and deteriorating the efficiency and performance of the radiator or the condenser respectively. Inefficient performance of the radiator may in extreme conditions lead to complications such as for example, the radiator failing to remove heat from the engine and resulting in engine seizure due to excessive heat. In case of a condenser, inefficient performance of the condenser may cause inefficient operation of the Heating Ventilation and Air Conditioning system, thereby causing inefficient cooling in the cabin and causing discomfort to the occupants.

Accordingly, there is a need for a protective system that not only protects the heat exchanger core such as radiator and/or condenser core but also ensures ram air reaches the radiator and/or condenser core to maintain proper efficiency and performance of the radiator and/or condenser respectively. Also, there is a need for a protective grid system that prevents lighter articles such as paper, polythene bags and leaves from getting in to path of ram air approaching the radiator or condenser core and deteriorating efficiency and performance of the radiator or condenser respectively, while still not compromising air flow through the radiator or condenser core. Still further, there is a need for a protective system that acts as a barrier in front of the radiator or condenser core and prevents heavier article such as stones from impacting and damaging the radiator and/or condenser core, while still not compromising air flow through the radiator or condenser core.

An object of the present invention is to provide a protective grid system configured with sealing elements for sealing a gap between a grid of the protective grid system and /or a heat exchanger core, particularly, a radiator core or condenser core to prevent escape of air through the gap and achieve proper utilization of the ram air.

Another object of the present invention is to provide a protective grid system that maintains efficiency and performance of a heat exchanger, particularly, a radiator and/or a condenser by directing most of the ram air thereto.

Still another object of the present invention is to provide a protective grid system that protects a heat exchanger core, particularly, a radiator core and/or condenser core against damage from impact of heavier articles such as stones.

Yet another object of the present invention is to provide a protective grid system that prevents lighter articles such as paper, polythene bags and leaves from getting in to path of ram air approaching a heat exchanger core such as for example, a radiator core and /or condenser core.

Still another object of the present invention is to provide a protective system that can be easily retrofitted over current radiators and /or condensers without requiring many modifications.

Another object of the present invention is to provide a protective system that enhances service life of a heat exchanger such as a radiator and/or condenser and reduces maintenance thereof.

Yet another of the present invention is to provide a protective system that is inexpensive and also convenient to manufacture, assemble and use.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

In accordance with an embodiment of the invention, a protective grid system is disclosed. The protective grid system includes at least one grid mounted over a face of at least one heat exchanger core such that at least one lateral edge of the grid configures sealing engagement with the heat exchanger core. The grid includes at least one sealing element configured along at least a part of the at least one longitudinal edge thereof and extending in direction of the face of the heat exchanger core. The sealing element contacts the face of the heat exchanger core to configure at least a partial sealing of gap between the grid and the heat exchanger core when ram air pushes the grid against the heat exchanger.

In accordance with another embodiment of the invention, the grid includes an array of elements defining restricted air passages.

In accordance with an embodiment of the invention, the elements are horizontally and vertically disposed beams that cross each other to configure the restricted air passages.

Alternatively, the elements are honeycomb structures that configure the restricted air passages.

In accordance with an embodiment of the invention, the grid is of metal and is configured by stamping process.

Alternatively, the grid is of plastic material and is configured by molding process.

Further, the grid includes first engagement elements that engage with complimentary second engagement elements configured on a housing receiving the heat exchanger core.

In accordance with an embodiment, at least a portion of the lateral edges of the grid is configured with guide-ways that receive protrusions configured along at least a portion of the lateral sides of the heat exchanger core for configuring lateral sealing between the grid and the heat exchanger core.

Alternatively, a portion of the lateral edges of the grid is configured with protrusions that are received within guide-ways configured along at least a portion of the lateral sides of the heat exchanger core for configuring lateral sealing between the grid and the heat exchanger core.

In accordance with an embodiment, the grid is so mounted on the heat exchanger core that at least some relative movement is permitted between the grid and the heat exchanger core.

In accordance with an embodiment of the invention, the sealing elements are pressed by the grid against the heat exchanger core and get deformed when ram air pushes the grid towards the heat exchanger core.

In accordance with an embodiment of the invention, the sealing elements are integrally formed on the longitudinal edges of the grid.

Alternatively, the sealing elements are detachably mounted on the longitudinal edges of the grid.

Preferably, the sealing element is of a resilient material such as rubber and is configured by either one of over-molding and extrusion process.

In accordance with an embodiment of the present invention, the sealing elements are located in front of tubes of the heat exchanger core.

Also is disclosed a heat exchanger module that includes a protective grid system as claimed in any of the preceding claims.

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
**FIGURE 1** illustrates a schematic representation of a protective grid system in accordance with an embodiment of the present invention that includes at least one grid mounted over a heat exchanger core and sealing elements configured along longitudinal edges of the at least one grid, also is illustrated an enlarged view depicting a sealing element for sealing the gap between the at least one grid and the heat exchanger core;
**FIGURE 2** illustrates a front view of the protective grid system of **FIGURE 1****;**
**FIGURE 3** illustrates an exploded view of the protective grid system of **FIGURE 1** along with the heat exchanger, wherein the grids are depicted separate from the heat exchanger core;
**FIGURE 4** illustrates sectional view of the protective grid system mounted on the heat exchanger core along section line A-A depicted in **FIGURE 2****,** also is depicted enlarged view of the sealing element configured along longitudinal edge of the grid for sealing the gap between the grid and the heat exchanger core;
**FIGURE 5** illustrates sectional view of the protective grid system mounted on the heat exchanger core along section line B-B depicted in **FIGURE 2****,** also is depicted enlarged view of engagement between guide ways configured on the grid and protrusions configured on lateral sides of the heat exchanger core for configuring lateral sealing between the grid and the heat exchanger core;
**FIGURE 6** illustrates sealing elements configured along longitudinal edges of a corresponding grid in accordance with one embodiment of the present invention, wherein the sealing elements are converging away from the grid; and
**FIGURE 7** illustrates sealing elements configured along longitudinal edges of a corresponding grid in accordance with another embodiment of the present invention, wherein the sealing elements are diverging away from the grid.

A protective grid system disclosed herein includes at least one grid mounted on at least one heat exchanger core, such as for example, a radiator core and/or condenser core. The at least one grid is configured with sealing elements disposed along longitudinal edges thereof. The sealing elements seal the gaps between the grid and the heat exchanger core, thereby preventing escape of air through the gaps between the grid and the heat exchanger core and achieving proper utilization of the ram air for maintaining efficiency and performance of the heat exchanger. Although, the protective grid system of the present invention is used in heat exchangers, such as radiators, condensers and evaporators that are used in vehicles, however, the protective grid system of the present invention is also applicable to any other heat exchangers used in non-vehicular systems such as generators that also involve air draft for achieving better performance of the heat exchanger.

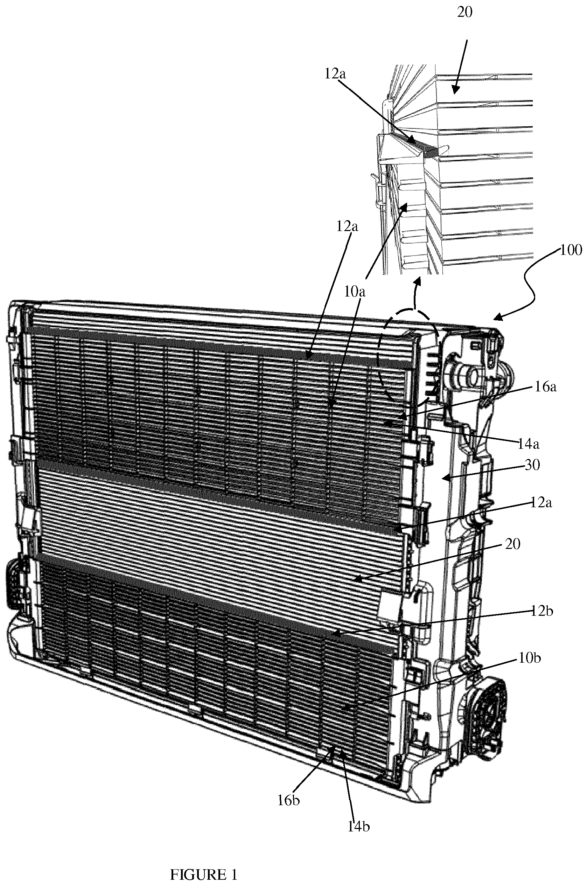

Referring to **FIGURE 1****,** a schematic representation of a protective grid system **100** in accordance with an embodiment of the present invention is illustrated. The protective grid system **100** includes at least one grid, **FIGURE 1** illustrates two grids, referred to as a first grid **10a** and a second grid **10b,** also simply referred to as grids **10a** and **10b** mounted over a heat exchanger core **20,** such as for example, radiator or condenser core and sealing elements **12a** and **12b** configured along at least a part of at least one longitudinal edge of the respective first and second grids **10a** and **10b.** Also, is illustrated an enlarged view depicting the sealing element **12a** sealing, at least partially, the gap between the grid **10a** and the heat exchanger core **20,** thereby preventing escape of air crossing the grid **10a** through the gap between the grid **10a** and the heat exchanger core **20.** With such configuration, most of the air that crosses the grid **10a** reaches the heat exchanger core **20,** thereby resulting in better utilization of the air for cooling in the heat exchanger and maintaining the performance and efficiency of the heat exchanger. As the first and the second grids **10a** and **10b** respectively are almost identical to each other, every embodiment disclosed henceforth in relation to the first grid **10a** configured with the sealing element **12a** and ways of mounting thereof on the heat exchanger core **20** may also be applicable for the second grid **10b** configured with the sealing element **12b.** For sake of brevity of present document, enlarged view depicting only the first grid **10a** mounted over the heat exchanger core **20** with the sealing element **12a** sealing the gap between the first grid **10a** and the heat exchanger core **20** is illustrated in the **FIGURE 1** and is described in the forthcoming description.

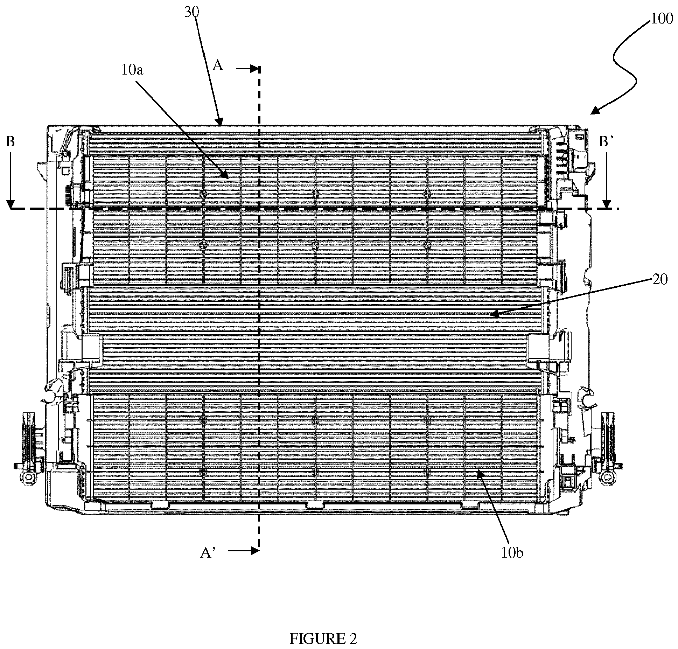

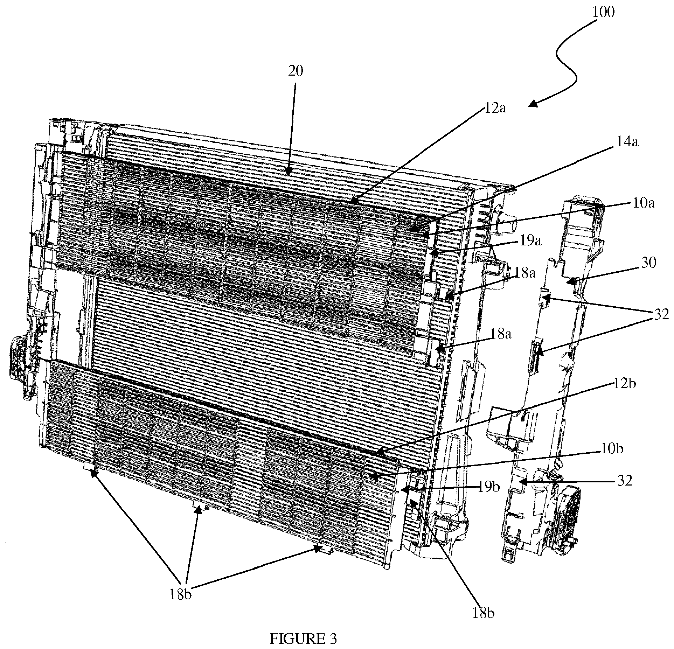

Referring to the **FIGURE 2** - **FIGURE 5****,** the first grid **10a** is mounted over a front face of the heat exchanger core **20** such that lateral edges of the first grid **10a** configure sealing engagement with the heat exchanger core **20.** The front face of the heat exchanger core **20** is the face facing a rear of a front grille mounted at front of the vehicle. In accordance with an embodiment, the first grid **10a** is detachably mounted over the front face of the heat exchanger core **20.** In accordance with still another embodiment of the present invention, the first grid **10a** includes at least one sealing element **12a** configured along at least a part of at least one longitudinal edge thereof. Specifically, the sealing element can be configured along only one longitudinal edge or both longitudinal edges of the first grid **10a,** and only on a portion of the longitudinal edge(s) or on all the longitudinal length of the longitudinal edge(s).

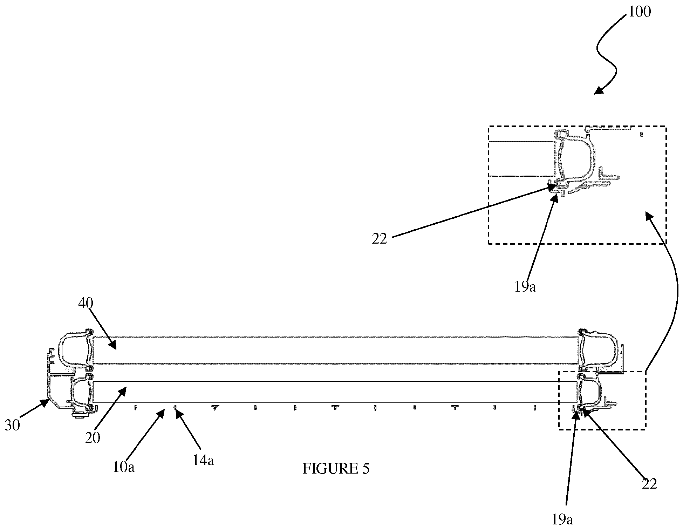

In accordance with an embodiment, the first grid **10a** includes an array of elements **14a** defining restricted air passages **16a** that restrain passage of articles of a predetermined size but facilitate air flow there through. Specifically, in accordance with a preferred embodiment, the elements **14a** configuring the passages **16a** are aligned with respect to at least few of the tubes of the heat exchanger core **20.** As a result, the elements **14a** configuring the first grid **10a** either not at all obstruct or do partial obstruct air flowing towards the heat exchanger core **20** and as such do not prevent the air from reaching and entering the heat exchanger core **20.** In accordance with a preferred embodiment, the elements **14a** are horizontally and vertically disposed beams that cross each other to configure the restricted air passages **16a.** In accordance with another embodiment, the elements **14a** are honeycomb structures that configure the restricted air passages **16a.** In accordance with still another embodiment, the first grid **10a** is formed of woven wires. In accordance with an embodiment, the first grid **10a** is of metal and is configured by stamping process. In accordance with another embodiment, the first grid **10a** is of plastic material and is configured by molding process with the beams integrally configured thereon during single step molding process. However, the first grid **10a** of the present invention is not limited to any particular configuration of the elements **14a** configuring the first grid **10a** and any particular material or process used for configuring the first grid **10a** as far as the first grid **10a** prevents lighter articles such as paper, polythene bags and leaves from getting in to path of ram air approaching the heat exchanger core **20** while still not compromising air flow through the heat exchanger core **20.** The first grid **10a** is so mounted over the front face of the heat exchanger core **20** that lateral edges of the first grid **10a** configure sealing engagement with the heat exchanger core **20.** Generally at least one of the lateral edges of the first grid **10a** configures sealing engagement with the heat exchanger core **20.** Specifically, either one or both of the lateral edges of the first grid **10a** configures sealing engagement with the heat exchanger core **20.** In accordance with an embodiment of the present invention as illustrated in **FIGURE 5****,** at least a portion of the lateral edges of the first grid **10a** is configured with guide-ways **19a** that receive protrusions **22** configured along at least a portion of lateral sides of the heat exchanger core **20** for configuring sliding engagement and lateral sealing between the first grid **10a** and the heat exchanger core **20.** In accordance with another embodiment of the present invention (not illustrated on figures), at least a portion of the lateral edges of the first grid **10a** is configured with protrusions **22** that are received within guide-ways **19a** configured along at least a portion of lateral sides of the heat exchanger core **20** for configuring sliding engagement and lateral sealing between the first grid **10a** and the heat exchanger core **20.** With such lateral sealing between the first grid **10a** and the heat exchanger core **20,** escape of air through the gap between the lateral edges of the first grid **10a** and the lateral sides of the heat exchanger core **20** is prevented, or at least significantly reduced. With such configuration, most of the air that crosses the first grid **10a** reaches the heat exchanger core **20,** thereby resulting in better utilization of the air for cooling in the heat exchanger and maintaining the performance and efficiency of the heat exchanger.

In accordance with an embodiment, the first grid **10a** is so mounted on the heat exchanger core **20** that at least some relative movement is permitted between the first grid **10a** and the heat exchanger core **20.** Once the first grid **10a** is disposed in the desired position with respect to the heat exchanger core **20,** complementary engagement elements configured on the first grid **10a** and a housing **30** receiving the heat exchanger core **20** facilitate mounting of the first grid **10a** over the heat exchanger core **20.** In accordance with an embodiment of the present invention, the first engagement elements **18a** configured on the first grid **10a** engages with complimentary second engagement elements **32** configured on the housing **30** receiving the heat exchanger core **20** to facilitate secure mounting of the first grid **10a** over the front face of the heat exchanger core **20.** However, the first grid **10a** of the present invention is not limited to any particular configuration of the elements configuring lateral sealing between the first grid **10a** and the heat exchanger core **20.** Also, the first grid **10a** of the present invention is not limited to any particular configuration of the elements used for securely mounting of the first grid **10a** over the front face of the heat exchanger core **20.**

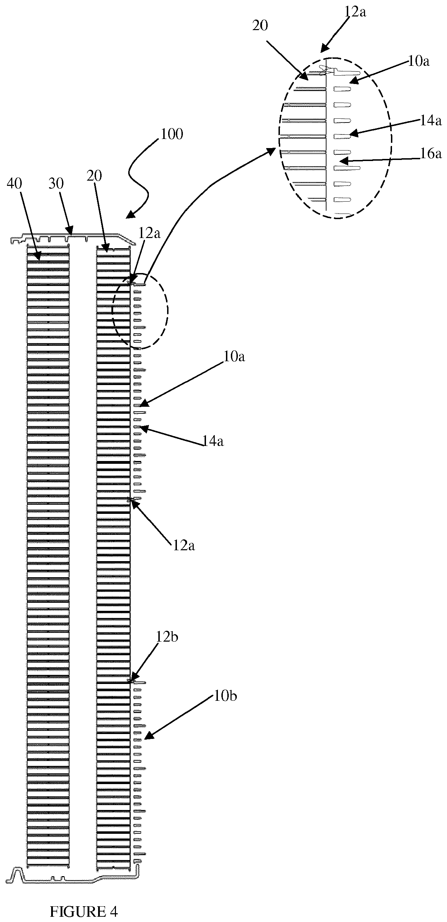

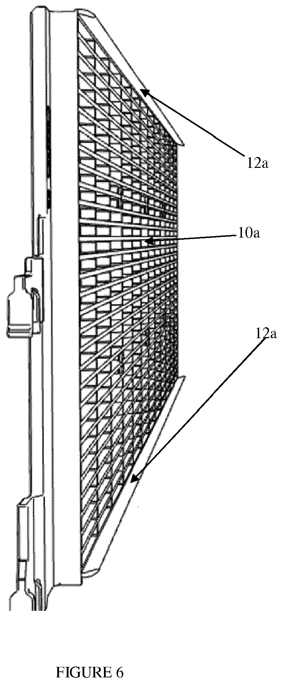

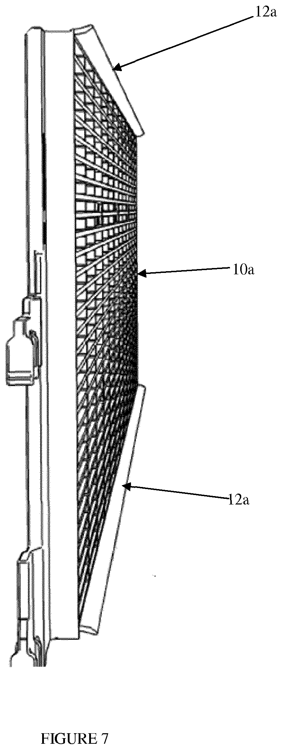

**FIGURE 1** and **FIGURE 4** depict the sealing elements **12a** configured along longitudinal edges of the first grid **10a.** In accordance with an embodiment of the present invention, the sealing element **12a** is integrally formed on the longitudinal edges of the first grid **10a.** Alternatively, the sealing element **12a** is detachably mounted on the longitudinal edges of the first grid **10a.** As, detachable engagement means for detachably mounting the at least one sealing element **12a** on the longitudinal edges of the first grid **10a** is well known therefore such detachable engagement means are not disclosed in details for the sake of brevity of the present document. In accordance with an embodiment of the present invention, the sealing elements **12a** configured along opposite longitudinal edges of the first grid **10a** are converging away from the first grid **10a** as illustrated in **FIGURE** 6. Alternatively, the sealing elements **12a** configured along opposite longitudinal edges of the first grid **10a** are diverging away from the first grid **10a** as illustrated in **FIGURE 7****.** In accordance with an embodiment of the present invention, the sealing elements **12a** are located in front of tubes of the heat exchanger core **20.** Specifically, the sealing elements **12** are aligned with respect to at least few of the tubes of the heat exchanger core **20.** As a result, the sealing elements **12** do not obstruct air flowing towards the heat exchanger core **20** and as such do not prevent the air from reaching and entering the heat exchanger core **20.** The sealing element **12a** is of a resilient material such as rubber and is configured by either one of over-molding and extrusion process. However, the present invention is not limited to any particular configuration, material and method of manufacturing the sealing element **12a.** In accordance with the present invention, the sealing element **12a** extends in the direction of or towards the front face of the heat exchanger core **20** and contacts the front face of the heat exchanger core **20** only when ram air or any external air flow pushes the first grid **10a** towards the heat exchanger core **20.** The sealing element **12a** remains in contact with the front face of the heat exchanger core **20** as far as the ram air or any external air flow pushes the grid **10a** towards the heat exchanger core **20** and the sealing element **12a** does not remain in contact with the front face of the heat exchanger core **20** at all the time, such as at times when ram air or any external air flow is not pushing the grid **10a** towards the heat exchanger core **20.** With such configuration of the sealing elements, the sealing elements **12a** seals the gap between the first grid **10a** the heat exchanger core **20** for preventing escape of air through the gap before reaching the heat exchanger core **20,** only when ram air or any external air flow pushes the grid **10a** towards the heat exchanger core **20.**

In one embodiment of the present invention, the sealing element **12a** gets deformed and is further pressed against the heat exchanger core **20** by the first grid **10a** when ram air pushes the first grid **10a** towards the heat exchanger core **20,** thereby enhancing the sealing between the first grid **10a** and the heat exchanger core **20.** In accordance with an embodiment of the present invention, the sealing element **12a** is bifurcated at a distal end thereof, and two arms forming the bifurcated portion of the sealing element **12a** spread away from each other and get pressed against the heat exchanger core **20.** Such configuration of the sealing element **12a** facilitates in achieving better longitudinal sealing between the first grid **10a** and the heat exchanger core **20.** Such configuration ensures better utilization of ram air by directing most of the ram air to the heat exchanger core **20,** thereby maintaining efficiency and performance of the heat exchanger.

Several modifications and improvement might be applied by the person skilled in the art to the protective grid system as defined above, as long as it comprises at least one grid mounted over a face of at least one heat exchanger core such that at least one lateral edge of the grid configures sealing engagement with the heat exchanger core, the grid includes at least one sealing element configured along the at least one longitudinal edge thereof and extending till in direction of the face of the heat exchanger core, the sealing element contacts the face of the heat exchanger core to configure at least a partial sealing of the gap between the grid and the heat exchanger core.

## Claims

1. A protective grid system (100) comprising at least one grid (10a, 10b) adapted to be mounted over a face of at least one heat exchanger core (20) such that at least one lateral edge of said grid (10a, 10b) is adapted to configure sealing engagement with said heat exchanger core (20), said grid (10a, 10b) comprising at least one sealing element (12a, 12b) configured along at least a part of the at least one longitudinal edge thereof and extending in direction of said face of said heat exchanger core (20), said sealing element (12a, 12b) being adapted to contact said face of said heat exchanger core (20) to configure at least a partial sealing of gap between said grid (10a, 10b) and said heat exchanger core (20), **characterized in that** said sealing elements (12a, 12b) are adapted to be pressed by said grid (10, 10b) against said heat exchanger core (20) and get deformed only when ram air pushes said grid (10a, 10b) towards said heat exchanger core (20).

2. The protective grid system (100) as claimed in the preceding claim, wherein said grid (10a, 10b) comprises an array of elements (14a, 14b) adapted to define restricted air passages (16a, 16b).

3. The protective grid system (100) as claimed in the preceding claim, wherein said elements (14a, 14b) are horizontally and vertically disposed beams that cross each other to configure said restricted air passages (16a, 16b).

4. The protective grid system (100) as claimed in claim 2, wherein said elements (14a, 14b) are honeycomb structures adapted to configure said restricted air passages (16a, 16b).

5. The protective grid system (100) as claimed in any of the preceding claims, wherein said grid (10a, 10b) is of metal and is configured by stamping process.

6. The protective grid system (100) as claimed in one of claim 1 to 4, wherein said grid (10a, 10b) is of plastic material and is configured by molding process.

7. The protective grid system (100) as claimed in any of the preceding claims, wherein said grid (10a, 10b) further comprises first engagement elements (18a, 18b) adapted to engage with complimentary second engagement elements (32) configured on a housing (30) receiving said heat exchanger core (20).

8. The protective grid system (100) as claimed in any of the preceding claims, wherein at least a portion of said lateral edges of said grid (10a, 10b) is configured with guide-ways (19a, 19b) that are adapted to receive protrusions (22) configured along at least a portion of lateral sides of said heat exchanger core (20) for configuring lateral sealing between said grid (10a, 10b) and said heat exchanger core (20).

9. The protective grid system (100) as claimed in any of claims 1 to7, wherein at least a portion of said lateral edges of said grid (10a, 10b) is configured with protrusions (22) that are adapted to be received within guide-ways (19a, 19b) configured along at least a portion of lateral sides of said heat exchanger core (20) for configuring lateral sealing between said grid (10a, 10b) and said heat exchanger core (20).

10. The protective grid system (100) as claimed in any of the preceding claims, wherein said grid (10a, 10b) is so mounted on said heat exchanger core (20) that at least some relative movement is permitted between said grid (10a, 10b) and said heat exchanger core (20).

11. The protective grid system (100) as claimed in any of the preceding claims, wherein said sealing elements (12a, 12b) are integrally formed on said longitudinal edges of said grid (10a, 10b).

12. The protective grid system (100) as claimed in any of the preceding claims, wherein said sealing elements (12a, 12b) are detachably mounted on said longitudinal edges of said grid (10a, 10b).

13. The protective grid system (100) as claimed in any of the preceding claims, wherein said sealing element (12a, 12b) is of a resilient material such as rubber and is configured by either one of over-molding and extrusion process.

14. The protective grid system (100) as claimed in any of the preceding claims, wherein said sealing elements (12a, 12b) are located in front of tubes of said heat exchanger core (20).

15. A heat exchanger module (200) comprising a protective grid system (100) as claimed in any of the preceding claims.

## Patentansprüche

1. Schutzgittersystem (100), mindestens ein Gitter (10a, 10b) umfassend, das dazu eingerichtet ist, über eine Seite mindestens eines Wärmetauscherkerns (20) montiert zu werden, sodass mindestens eine Seitenkante des Gitters (10a, 10b) dazu eingerichtet ist, einen Dichtungseingriff in den Wärmetauscherkern (20) auszubilden, wobei das Gitter (10a, 10b) mindestens ein Dichtungselement (12a, 12b) umfasst, das entlang zumindest eines Teils dessen mindestens einer Längskante ausgebildet ist und sich in Richtung der Seite des Wärmetauscherkerns (20) erstreckt, wobei das Dichtungselement (12a, 12b) dazu eingerichtet ist, die Seite des Wärmetauscherkerns (20) zu berühren, um mindestens eine Teildichtung des Spalts zwischen dem Gitter (10a, 10b) und dem Wärmetauscherkern (20) auszubilden, **dadurch gekennzeichnet, dass** die Dichtungselemente (12a, 12b) dazu eingerichtet sind, nur vom Gitter (10, 10b) gegen den Wärmetauscherkern (20) gedrückt und verformt zu werden, wenn Staudruckluft das Gitter (10a, 10b) zum Wärmetauscherkern (20) drückt.

2. Schutzgittersystem (100) nach dem vorstehenden Anspruch, wobei das Gitter (10a, 10b) eine Anordnung von Elementen (14a, 14b) umfasst, die dazu eingerichtet sind, eingeschränkte Luftdurchgänge (16a, 16b) zu definieren.

3. Schutzgittersystem (100) nach dem vorstehenden Anspruch, wobei die Elemente (14a, 14b) horizontal und vertikal angeordnete Balken sind, die einander kreuzen, um die eingeschränkten Luftdurchgänge (16a, 16b) auszubilden.

4. Schutzgittersystem (100) nach Anspruch 2, wobei die Elemente (14a, 14b) Wabenstrukturen sind, die dazu eingerichtet sind, die eingeschränkten Luftdurchgänge (16a, 16b) auszubilden.

5. Schutzgittersystem (100) nach einem der vorstehenden Ansprüche, wobei das Gitter (10a, 10b) aus Metall besteht und durch einen Stanzvorgang ausgebildet ist.

6. Schutzgittersystem (100) nach einem der Ansprüche 1 bis 4, wobei das Gitter (10a, 10b) aus Kunststoff besteht und durch einen Formungsvorgang ausgebildet ist.

7. Schutzgittersystem (100) nach einem der vorstehenden Ansprüche, wobei das Gitter (10a, 10b) ferner erste Eingriffselemente (18a, 18b) umfasst, die dazu eingerichtet sind, in passende zweite Eingriffselemente (32) einzugreifen, die auf einem Gehäuse (30) ausgebildet sind, das den Wärmetauscherkern (20) aufnimmt.

8. Schutzgittersystem (100) nach einem der vorstehenden Ansprüche, wobei zumindest ein Abschnitt der Seitenkanten des Gitters (10a, 10b) mit Führungsbahnen (19a, 19b) ausgebildet ist, die dazu eingerichtet sind, Vorsprünge (22) aufzunehmen, die entlang zumindest eines Abschnitts der Seiten des Wärmetauscherkerns (20) ausgebildet sind, um die Seitendichtung zwischen dem Gitter (10a, 10b) und dem Wärmetauscherkern (20) auszubilden.

9. Schutzgittersystem (100) nach einem der Ansprüche 1 bis 7, wobei zumindest ein Abschnitt der Seitenkanten des Gitters (10a, 10b) mit Vorsprüngen (22) ausgebildet ist, die dazu eingerichtet sind, in Führungsbahnen (19a, 19b) aufgenommen zu werden, die entlang zumindest eines Abschnitts der Seiten des Wärmetauscherkerns (20) ausgebildet sind, um die Seitendichtung zwischen dem Gitter (10a, 10b) und dem Wärmetauscherkern (20) auszubilden.

10. Schutzgittersystem (100) nach einem der vorstehenden Ansprüche, wobei das Gitter (10a, 10b) so über den Wärmetauscherkern (20) montiert ist, dass zumindest eine relative Bewegung zwischen dem Gitter (10a, 10b) und dem Wärmetauscherkern (20) zugelassen wird.

11. Schutzgittersystem (100) nach einem der vorstehenden Ansprüche, wobei die Dichtungselemente (12a, 12b) an den Längskanten des Gitters (10a, 10b) einstückig ausgebildet sind.

12. Schutzgittersystem (100) nach einem der vorstehenden Ansprüche, wobei die Dichtungselemente (12a, 12b) an den Längskanten des Gitters (10a, 10b) lösbar montiert sind.

13. Schutzgittersystem (100) nach einem der vorstehenden Ansprüche, wobei das Dichtungselement (12a, 12b) aus einem elastischen Material wie Kautschuk besteht und durch einen Überspritzungs- oder Strangpressvorgang ausgebildet ist.

14. Schutzgittersystem (100) nach einem der vorstehenden Ansprüche, wobei sich die Dichtungselemente (12a, 12b) vor den Rohren des Wärmetauscherkerns (20) befinden.

15. Wärmetauschermodul (200), ein Schutzgittersystem (100) nach einem der vorstehenden Ansprüche umfassend.

## Revendications

1. Système (100) de grille de protection, comprenant au moins une grille (10a, 10b) adaptée à être montée pardessus une face d'au moins un faisceau (20) d'échangeur de chaleur de sorte qu'au moins un bord latéral de ladite grille (10a, 10b) est adapté à configurer une coopération à étanchéité avec ledit faisceau (20) d'échangeur de chaleur, ladite grille (10a, 10b) comprenant au moins un élément d'étanchéité (12a, 12b) configuré le long d'au moins une partie de son au moins un bord longitudinal et s'étendant en direction de ladite face dudit faisceau (20) d'échangeur de chaleur, ledit élément d'étanchéité (12a, 12b) étant adapté à venir au contact de ladite face dudit faisceau (20) d'échangeur de chaleur pour configurer au moins une étanchéisation partielle de l'espace entre ladite grille (10a, 10b) et ledit faisceau (20) d'échangeur de chaleur,
**caractérisé en ce que** lesdits éléments d'étanchéité (12a, 12b) sont adaptés à être comprimés par ladite grille (10, 10b) contre ledit faisceau (20) d'échangeur de chaleur et se déformer uniquement lorsque de l'air dynamique pousse ladite grille (10a, 10b) vers ledit faisceau (20) d'échangeur de chaleur.

2. Système (100) de grille de protection selon la revendication précédente, dans lequel ladite grille (10a, 10b) comprend un réseau d'éléments (14a, 14b) adaptés à définir des passages d'air restreints (16a, 16b).

3. Système (100) de grille de protection selon la revendication précédente, dans lequel lesdits éléments (14a, 14b) sont des poutres placées horizontalement et verticalement qui se croisent pour configurer lesdits passages d'air restreints (16a, 16b).

4. Système (100) de grille de protection selon la revendication 2, dans lequel lesdits éléments (14a, 14b) sont des structures en nid d'abeille adaptées à configurer lesdits passages d'air restreints (16a, 16b).

5. Système (100) de grille de protection selon l'une quelconque des revendications précédentes, dans lequel ladite grille (10a, 10b) est constituée de métal et est configurée par un processus d'estampage.

6. Système (100) de grille de protection selon l'une des revendications 1 à 4, dans lequel ladite grille (10a, 10b) est constituée de matière plastique et est configuré par un processus de moulage.

7. Système (100) de grille de protection selon l'une quelconque des revendications précédentes, dans lequel ladite grille (10a, 10b) comprend en outre des premier éléments de coopération (18a, 18b) adaptés à coopérer avec des deuxièmes éléments de coopération complémentaires (32) configurés sur un bâti (30) recevant ledit faisceau (20) d'échangeur de chaleur.

8. Système (100) de grille de protection selon l'une quelconque des revendications précédentes, dans lequel au moins une partie desdits bords latéraux de ladite grille (10a, 10b) est configurée avec des chemins de guidage (19a, 19b) qui sont adaptés à recevoir des protubérances (22) configurées le long d'au moins une partie de côtés latéraux dudit faisceau (20) d'échangeur de chaleur pour la configuration d'une étanchéisation latérale entre ladite grille (10a, 10b) et ledit faisceau (20) d'échangeur de chaleur.

9. Système (100) de grille de protection selon l'une quelconque des revendications 1 à 7, dans lequel au moins une partie desdits bords latéraux de ladite grille (10a, 10b) est configurée avec des protubérances (22) qui sont adaptées à être reçues à l'intérieur de chemins de guidage (19a, 19b) configurés le long d'au moins une partie de côtés latéraux dudit faisceau (20) d'échangeur de chaleur pour la configuration d'une étanchéisation latérale entre ladite grille (10a, 10b) et ledit faisceau (20) d'échangeur de chaleur.

10. Système (100) de grille de protection selon l'une quelconque des revendications précédentes, dans lequel ladite grille (10a, 10b) est montée sur ledit faisceau (20) d'échangeur de chaleur de manière à permettre au moins un certain mouvement relatif entre ladite grille (10a, 10b) et ledit faisceau (20) d'échangeur de chaleur.

11. Système (100) de grille de protection selon l'une quelconque des revendications précédentes, dans lequel lesdits éléments d'étanchéité (12a, 12b) sont formés d'un seul tenant sur lesdits bords longitudinaux de ladite grille (10a, 10b).

12. Système (100) de grille de protection selon l'une quelconque des revendications précédentes, dans lequel lesdits éléments d'étanchéité (12a, 12b) sont montés amovibles sur lesdits bords longitudinaux de ladite grille (10a, 10b).

13. Système (100) de grille de protection selon l'une quelconque des revendications précédentes, dans lequel ledit élément d'étanchéité (12a, 12b) est constitué d'une matière élastique telle que le caoutchouc et est configuré soit par un processus de surmoulage, soit par un processus d'extrusion.

14. Système (100) de grille de protection selon l'une quelconque des revendications précédentes, dans lequel lesdits éléments d'étanchéité (12a, 12b) sont situés devant des tubes dudit faisceau (20) d'échangeur de chaleur.

15. Module échangeur de chaleur (200) comprenant un système (100) de grille de protection selon l'une quelconque des revendications précédentes.
